# EUROPÄISCHE PATENTANMELDUNG

(11) **EP 4 343 226 A1**
(43) Veröffentlichungstag der Anmeldung: **27.03.2024**
(21) Anmeldenummer: 22197412.4
(22) Anmeldetag: 23.09.2022
(51) Int. Cl.: F24S 20/62, F24S 25/12, F24S 25/63

(54) **SOLARPANEEL UND ZAUN, AUSGESTATTET MIT MINDESTENS EINEM DERARTIGEN SOLARPANEEL**

(71) Anmelder: Bockmeyer, Thomas, 49811 Lingen (DE); Tillmann & Schroyen GmbH & Co. KG, 59757 Arnsberg (DE)
(72) Erfinder: BOCKMEYER, Thomas, 49811 Lingen (DE)
(74) Vertreter: Bossmeyer, Jörg Peter

(57) **Zusammenfassung**

Es wird ein Solarpaneel (1) zur Befestigung an einem aus mehreren Zaunelementen (2) bestehenden Zaun (3) vorgestellt, bei dem jedes Zaunelement (2) aus zwei Zaunpfeilern (4, 5) und einem zwischen den Zaunpfeilern (4, 5) angeordneten Flächengebilde (6) besteht, wobei das Solarpaneel (1) eine mit Solarelementen ausgestattete Oberseite (7) und eine dieser Oberseite (7) gegenüberliegende Unterseite (8) umfasst, die mindestens einen, das Solarpaneel (1) aufnehmenden Tragbock (9) aufweist. Die Erfindung ist dadurch gekennzeichnet, dass der Tragbock (9) aus einem Tragarm (10) und einer Klammer oder Hülse (11) besteht, wobei die Klammer oder Hülse (11) zu dem oberen, freien Ende (12) eines Zaunpfeilers (4, 5) passend ausgeführt und auf den korrespondierenden Zaunpfeiler (4, 5) aufsetzbar oder mit diesem verbindbar ist.

Der darüber hinaus beschriebene, erfindungsgemäße Zaun (3) besteht aus mehreren Zaunelementen (2), von denen jedes Zaunelement (2) aus zwei Zaunpfeilern (4, 5) und einem zwischen den Zaunpfeilern (4, 5) angeordneten Flächengebilde (6) besteht, wobei auf dem oberen, freien Ende der Zaunpfeiler (4, 5) mindestens ein vorgenanntes Solarpaneel (1) fixiert ist, dessen Klammer oder Hülse (11) zu dem oberen, freien Ende (12) wenigstens eines der Zaunpfeiler (4, 5) passend ausgeführt und auf einen der korrespondierenden Zaunpfeiler (4, 5) aufgesetzt oder mit diesem verbunden ist.

## Beschreibung

Die Erfindung betrifft ein Solarpaneel nach dem Oberbegriff des Patentanspruches 1 sowie einen Zaun, der mit mindestens einem derartigen Solarpaneel ausgestattet ist.

Aus der DE 39 26 967 A1 geht eine Vorrichtung zur Festlegung von Sonnenkollektorelementen oder Solarpaneelen hervor, die an einer gegenüber einem Tragbock schwenkbar gelagerten Tragplatte aufgenommen sind. Die Tragplatte ist mittels einer Rastvorrichtung gegenüber dem Tragbock in verschiedenen Schwenkstellungen arretierbar. Der Tragbock kann an einem Gerüst oder einem Zaunpfahl befestigt werden. Nähere Ausführungen zur Befestigung des Tragbockes an einem Zaunpfahl sind der Druckschrift allerdings nicht entnehmbar.

Die DE 20 2011 102 615 U1 betrifft eine Befestigungsanordnung für ein Solarpaneel an der Brüstung eines Balkons. Die Befestigungsanordnung weist einen unteren und einen oberen Haltewinkel auf, der über die Brüstung des Balkons gestülpt wird und an dem ein in unterschiedlichen Winkelstellungen anordnenbarer Trägerrahmen für das Solarpaneel befestigt ist.

In der JP 2006-128573 A ist ferner ein an einer Brüstung oder einem Zaun anbringbares Solarpaneel beschrieben. Dabei sind ein inneres und ein äußeres Traggestellteil vorgesehen, welche zur Einstellung eines der Zaunbreite entsprechenden Abstandes gegeneinander verstellbar sind. Der Tragrahmen des Solarpaneels weist ferner zwei Stützarme auf, welche gegenüber dem Traggestellteil und einer Einstellplatte verstellbar beziehungsweise verschwenkbar angeordnet sind. Die in dieser Druckschrift offenbarte Lösung ist sehr komplex ausgeführt und erfordert daher einen erheblichen Montageaufwand sowie eine Vielzahl aufwendiger Einzelteile, sodass ein derartiges Solarpaneel kostenintensiv ist.

Der Erfindung liegt die Aufgabe zugrunde, eine einfache Ausführung von Solarpaneelen zu schaffen, die ohne erheblichen Montageaufwand an einem Zaun befestigt werden können. Darüber hinaus liegt der Erfindung die Aufgabe zugrunde, einen mit Solarpaneele ausgestatteten Zaun bereitzustellen.

Die Erfindung löst diese Aufgabenstellung mit den Merkmalen des Patentanspruches 1 und des Patentanspruches 12.

Weitere Ausgestaltungen der Erfindung sind Gegenstand der sich jeweils anschließenden Unteransprüche.

Ein Solarpaneel, insbesondere zur Befestigung an einem aus mehreren Zaunelementen bestehenden Zaun, bei dem jedes Zaunelement aus zwei Zaunpfeilern und einem zwischen den Zaunpfeilern angeordneten Flächengebilde besteht, wobei das Solarpaneel eine mit Solarelementen ausgestattete Oberseite und eine dieser Oberseite gegenüberliegende Unterseite umfasst, die mindestens einen, das Solarpaneel aufnehmenden Tragbock aufweist, wurde erfindungsgemäß dahingehend weitergebildet, dass der Tragbock aus einem Tragarm und einer Klammer oder Hülse besteht, wobei die Klammer oder Hülse insbesondere zu dem oberen, freien Ende eines Zaunpfeilers oder der Zaunpfeiler passend ausgeführt und auf den korrespondierenden Zaunpfeiler aufsetzbar und/oder mit diesem verbindbar ist.

Mit der Erfindung gelingt es erstmals, bislang nicht für die Energiegewinnung genutzte Flächen mit Solarpaneelen auszustatten, wofür sich Zäune in besonderer Weise eignen. Die Anordnung einer Vielzahl einzelner Solarpaneele entlang eines Zaunes gestattet die großflächige Erzeugung elektrischer oder thermischer Energie mittels der Solarpaneele. Durch die erfindungsgemäße Ausführung des Tragbockes mit einer Klammer oder Hülse oder allgemeiner ausgedrückt mit einem Befestigungselement, kann das entsprechende Solarpaneel ohne großen Montageaufwand einfach auf die Zaunpfeiler aufgesetzt oder mit den Zaunpfeilern verbunden werden. Auf diese Weise lässt sich im Sinne eines Schnellmontagesystems innerhalb kurzer Zeit die gewünschte Energie erzeugen.

Entsprechend einer ersten Ausgestaltung der Erfindung wird vorgeschlagen, dass zwischen zwei Zaunpfeilern eines Zaunelements jeweils ein, insbesondere erfindungsgemäßes, Solarpaneel angeordnet ist. Diese Ausführungsvariante ist deshalb von Vorteil, weil die Länge des entsprechenden Solarpaneels jeweils der breite eines Zaunelementes entspricht und dadurch die Montage ohne großen Zeitaufwand möglich wird. Zudem hält sich das Gewicht eines derartigen Solarpaneels in Grenzen, sodass die Montage problemlos auch von einer Einzelperson durchgeführt werden kann.

Je nach Länge des einzelnen Zaunelements und damit der Länge des Solarpaneels kann es allerdings auch erforderlich werden, eine Versteifung des Solarpaneels vorzusehen. Hierfür wird entsprechend einer Weiterbildung der Erfindung vorgeschlagen, dass an der Unterseite des Solarpaneels ein das Solarpaneel versteifender Rahmen angeordnet ist. Der Rahmen kann dabei zwischen dem Tragarm des Tragbockes und der Unterseite des Solarpaneels angeordnet sein oder die Tragarme integrieren, sodass die Tragarme zusammen mit dem Rahmen eine Einheit bilden. In besonders bevorzugter Weise sollte der Rahmen dabei in einer stabilen Leichtbauweise zum Beispiel aus Aluminium oder UV-beständigen beziehungsweise witterungsbeständigen Kunststoffen hergestellt werden.

Hinsichtlich der Herstellung einer Verbindung zwischen der Klammer oder Hülse und dem oberen Ende des zugehörigen oder korrespondierenden Zaunpfeilers ist es von besonderem Vorteil, wenn die Klammer oder Hülse stoffschlüssig, formschlüssig, kraftschlüssig und/oder mittels einer lösbaren Verbindung an dem korrespondierenden Zaunpfeiler befestigt ist, um beispielsweise im Bedarfsfall ein Solarpaneel auswechseln zu können. Die erwähnte stoffschlüssige Verbindung zwischen Klammer beziehungsweise Hülse und oberem Ende des Zaunpfeilers kann im einfachsten Falle eine Klebeverbindung sein. Dabei erweist sich allerdings der Austausch eines Solarpaneels eher als schwierig. Bei einer formschlüssigen Verbindung kann beispielsweise eine Rastkontur zwischen Zaunpfeiler und Klammer beziehungsweise Hülse vorgesehen werden. Eine kraftschlüssige Verbindung ist zum Beispiel umsetzbar, indem die Klammer oder Hülse auf das obere Ende des Zaunpfahls unter Bildung eines Presssitzes aufgepresst wird. Lösbare Verbindungen sind für die Umsetzung der Erfindung von besonderem Vorteil, da das Auswechseln eines Solarpaneels dadurch wesentlich vereinfacht wird. Hierbei kann es sich beispielsweise um eine Schraub- oder Splintverbindung handeln.

Der Wirkungsgrad von Solarpaneelen ist umso größer je direkter die Sonneneinstrahlung auf das Solarpaneel erfolgt. Aus dem genannten Grund geht eine sehr vorteilhafte Ausgestaltung der Erfindung dahin, beispielsweise mindestens ein Gelenk zum Verschwenken des Solarpaneels vorzusehen, insbesondere zwischen der Klammer oder Hülse und dem Tragarm des Tragbockes mindestens ein Gelenk vorzusehen, mittels dessen das Solarpaneel verschwenkt und folglich zum Beispiel in Richtung der maximalen Sonneneinstrahlung ausgerichtet werden kann. Bei einem sehr langen Zaun sollten dabei sämtliche Solarpaneele über Gelenke verfügen. Ein weiterer Vorteil derartig gestalteter Zäune mit erfindungsgemäß schwenkbaren Solarpaneelen besteht darin, dass diese nur geringfügig windanfällig sind, wenn die Solarpaneele beispielsweise horizontal ausgerichtet sind.

Ein Gelenk weist die Besonderheit auf, dass die darüber verbundenen Bauelemente relativ zueinander bewegt werden können. Im Sinne der Erfindung sollte das Solarpaneel um das mindestens eine Gelenk verschwenkbar und damit beweglich ausgeführt sein, wobei es besonders vorteilhaft ist, wenn der um das Gelenk schwenkbare, insbesondere das Solarpaneel allgemein oder der das Solarpaneel aufnehmende, Tragarm in mehreren Positionen fixierbar ausgeführt ist, sodass das Solarpaneel eine horizontale Position oder eine um einen Winkel verschwenkte Position auf dem Zaun einnimmt. Eine einmal eingestellte Position kann auf diese Weise jederzeit geändert und dem jeweiligen Sonnenstand entsprechend angepasst werden.

Entsprechend einer weiterbildenden Maßnahme wird davon ausgegangen, dass mindestens einer der das Solarpaneel aufnehmenden Tragarme mittels einer Verstelleinrichtung in eine definierte Position ausrichtbar ist. Die Verstelleinrichtung ermöglicht dabei die Ausrichtung eines einzelnen Solarpaneels oder sämtlicher Solarparallele in gleicher Weise.

Um die Verstellung der Solarpaneele zu automatisieren, ist es von besonderem Vorteil, wenn die Verstelleinrichtung einen Motor umfasst, der insbesondere zur Vermeidung manueller Tätigkeiten entsprechend einer weiteren Ausgestaltung der Erfindung ein ferngesteuerter Motor ist. Somit reduziert sich der Aufwand für die optimale Ausnutzung der Sonnenenergie auf ein Mindestmaß oder entfällt gänzlich.

Als Motoren können zum Beispiel Elektromotoren, vorzugsweise Schrittmotoren, zum Einsatz kommen, wobei es zur Schaffung einer Übersetzung der Drehzahl des Motors beziehungsweise der Motoren von Vorteil ist, wenn die Verstelleinrichtung ein Getriebe aufweist. Über das Getriebe kann erreicht werden, dass die Solarpaneele mit einer sehr geringen Geschwindigkeit in die erforderliche Position überführt werden, um das einfallende Sonnenlicht optimal nutzen zu können.

Die zuvor bereits erwähnte Fernsteuerung der Schwenkbewegung der Solarpaneele und damit des Antriebs des Motors oder der Motoren wird sehr wesentlich verbessert, wenn die Verstelleinrichtung über eine Funk-Schnittstelle ansteuerbar ist, die vorzugsweise eine WLAN-Schnittstelle ist. Durch die Funk- oder WLAN-Schnittstelle kann die gesamte auf dem Zaun vorhandene Solaranlage mittels eines mobilen Endgerätes, also beispielsweise mittels einer geeigneten Software auf einem Mobiltelefon gesteuert werden.

Die Erfindung betrifft ferner einen Zaun, bestehend aus mehreren Zaunelementen, von denen jedes Zaunelement aus zwei Zaunpfeilern und einem zwischen den Zaunpfeilern angeordneten Flächengebilde besteht, wobei auf dem oberen, freien Ende der oder wenigstens eines der Zaunpfeiler, insbesondere jeweils, mindestens ein zuvor beschriebenes Solarpaneel fixiert ist, dessen Klammer oder Hülse zu dem oberen, freien Ende wenigstens eines der Zaunpfeiler oder des wenigstens einen Zaunpfeilers passend ausgeführt und auf den oder einen der korrespondierenden Zaunpfeiler aufgesetzt und/oder mit diesem verbunden ist.

Der zunehmende Bedarf an alternativer, die Umwelt schonender Energieerzeugung, die auch die Erzeugung von Strom oder Wärmeenergie mittels Solarpaneelen umfasst, bringt bislang den Nachteil mit sich, dass ganze Landschaften mit derartigen Solarpaneelen ausgestattet werden müssen. Der wesentliche Vorteil eines erfindungsgemäßen Zaunes besteht daher darin, dass auf der Oberseite eines jeden Zaunelements jeweils mindestens ein Solarpaneel angeordnet werden kann und folglich entlang der gesamten Zaunlänge derartige Solarpaneele zum Einsatz kommen. Durch die erhebliche Anzahl der somit platzsparend angeordneten Solarpaneele besteht folglich die Möglichkeit, große Mengen an Elektroenergie oder thermischer Energie zu erzeugen, ohne dafür großflächig Landschaften mit Solarpaneelen ausstatten zu müssen. Mit anderen Worten werden hier für die Aufstellung des Zaunes ohnehin erforderliche Flächen einer weiteren, sinnvollen Verwendung zugeführt.

Entsprechend einer Ausgestaltung des erfindungsgemäßen Zaunes wird darüber hinaus vorgeschlagen, dass die Klammer oder Hülse stoffschlüssig, formschlüssig, kraftschlüssig und/oder mittels einer lösbaren Verbindung an dem korrespondierenden Zaunpfeiler befestigt ist.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine erste Ausführungsvariante der Oberseite eines Zauns mit Solarpaneelen in einer Explosivdarstellung und
- Figur 2:: eine weitere Ausführungsvariante der Oberseite eines Zauns mit Solarpaneelen in einer Explosivdarstellung.

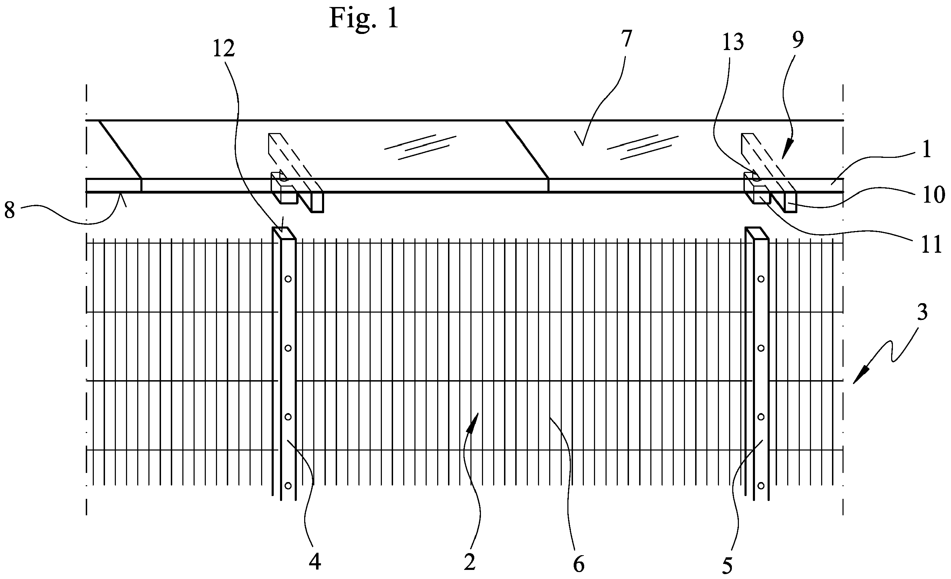

Der in der Figur 1 ausschnittsweise gezeigte Zaun 3 besteht in an sich bekannter Weise aus Zaunpfeilern 4 und 5, zwischen denen jeweils ein Flächengebilde 6 angeordnet ist. Bei dem Flächengebilde 6 handelt es sich vorliegend um ein Stahlgitter, sodass der Zaun insgesamt stabil ausgeführt ist. Andere Flächengebilde, wie Platten oder ähnliche, können selbstverständlich ebenfalls zum Einsatz kommen. Dabei bilden jeweils die zueinander benachbarten Zaunpfeiler 4 und 5 mit dem dazwischen angeordneten Flächengebilde 6 ein Zaunelement 2. Das obere, freie Ende 12 der Zaunpfeiler 4, 5 ragt in seiner Höhe geringfügig über das Flächengebilde 6 hinaus. Dadurch besteht die Möglichkeit, auf das obere, freie Ende 12 der Zaunpfeiler 4, 5 eine hierzu passende Hülse 11 aufzusetzen und diese an dem Zaunpfeiler 4 und 5 zu befestigen. Die Hülse 11 ist dabei Bestandteil eines Tragbocks 9, der ferner einen Tragarm 10 aufweist, der an der Unterseite 8 eines Solarpaneels 1 angeordnet ist. Der Tragbock 9 nimmt somit das Solarpaneel 1 auf, stabilisiert es und dient gleichzeitig über die an ihm vorhandene Hülse 11 der Fixierung des Solarpaneels 1 auf dem freien Ende 12 der Zaunpfeiler 4 und 5. Die Oberseite 7 des Solarpaneels 1 verfügt in an sich bekannter Weise über Solarzellen oder Solarthermieelemente. Bei dem in der Figur 1 gezeigten Tragbock 9 ist zwischen dem Tragarm 10 und der Hülse 11 zusätzlich ein Gelenk 13 vorhanden, mittels dessen der Tragarm 10 relativ zu der Hülse 11 verschwenkt werden kann, sodass dadurch das von dem Tragbock 9 aufgenommene Solarpaneel 1 insgesamt verschwenkt werden kann. Diese Möglichkeit des Verschwenkens gestattet die optimale Ausrichtung des Solarpaneels 1 auf die Einstrahlungsrichtung der Sonne.

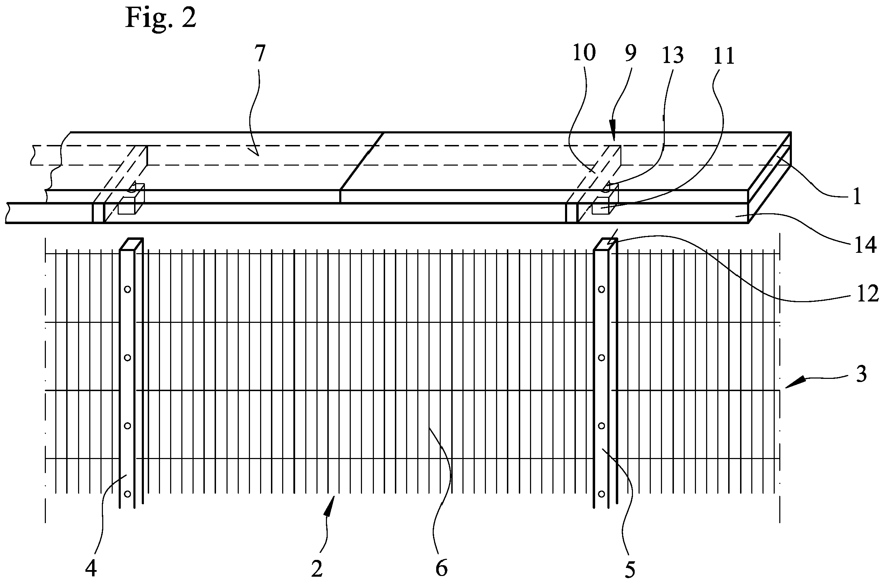

Der in Figur 2 gezeigte Zaun 3 ist baugleich zu der im Zusammenhang mit der Figur 1 beschriebenen Ausführung eines Zaunes 3. Im Unterschied zu der Ausführung des Solarpaneels 1 in Figur 1 ist an der Unterseite 8 des Solarpaneels 1 bei dem in Figur 2 gezeigten Beispiel zusätzlich ein Rahmen 14 vorhanden, der das Solarpaneel 1 stützt und damit versteift. Der Tragarm 10 eines jeden Tragbockes 9 ist dabei zwischen den Streben des Rahmens 14 eingefügt und damit zwischen den Streben aufgenommen. Natürlich kann der Tragbock 9 auch als Unterbau oder Überbau des dargestellten Rahmens 14 vorgesehen werden. Die Verwendung des Rahmens 14 unter dem Solarpaneel 1 gestattet wegen der damit einhergehenden, erhöhten Stabilität der Solarpaneele 1 einen vergrößerten Abstand der Tragböcke 9, was insgesamt zu einer Vereinfachung der Solarpaneele 1 führt.

### BEZUGSZEICHENLISTE:

- 1: Solarpaneel
- 2: Zaunelement
- 3: Zaun
- 4: Zaunpfeiler
- 5: Zaunpfeiler
- 6: Flächengebilde
- 7: Oberseite (des Solarpaneels)
- 8: Unterseite (des Solarpaneels)
- 9: Tragbock
- 10: Tragarm
- 11: Hülse
- 12: freies Ende (der Zaunpfeiler)
- 13: Gelenk
- 14: Rahmen

## Patentansprüche

1. Solarpaneel (1) zur Befestigung an einem aus mehreren Zaunelementen (2) bestehenden Zaun (3), bei dem jedes Zaunelement (2) aus zwei Zaunpfeilern (4, 5) und einem zwischen den Zaunpfeilern (4, 5) angeordneten Flächengebilde (6) besteht, wobei das Solarpaneel (1) eine mit Solarelementen ausgestattete Oberseite (7) und eine dieser Oberseite (7) gegenüberliegende Unterseite (8) umfasst, die mindestens einen, das Solarpaneel (1) aufnehmenden Tragbock (9) aufweist,
**dadurch gekennzeichnet, dass**
der Tragbock (9) aus einem Tragarm (10) und einer Klammer oder Hülse (11) besteht, wobei die Klammer oder Hülse (11) zu dem oberen, freien Ende (12) eines Zaunpfeilers (4, 5) passend ausgeführt und auf den korrespondierenden Zaunpfeiler (4, 5) aufsetzbar oder mit diesem verbindbar ist.

2. Solarpaneel nach Anspruch 1,
**dadurch gekennzeichnet, dass**
zwischen zwei Zaunpfeilern (4, 5) eines Zaunelements (2) jeweils ein Solarpaneel (1) angeordnet ist.

3. Solarpaneel nach einem der vorstehend genannten Ansprüche,
**dadurch gekennzeichnet, dass**
an der Unterseite (8) des Solarpaneels (1) ein das Solarpaneel (1) versteifender Rahmen (14) angeordnet ist.

4. Solarpaneel nach einem der vorstehend genannten Ansprüche,
**dadurch gekennzeichnet, dass**
die Klammer oder Hülse (11) stoffschlüssig, formschlüssig, kraftschlüssig oder mittels einer lösbaren Verbindung an dem korrespondierenden Zaunpfeiler (4, 5) befestigt ist.

5. Solarpaneel nach einem der vorstehend genannten Ansprüche,
**dadurch gekennzeichnet, dass**
zwischen der Klammer oder Hülse (11) und dem Tragarm (10) des Tragblockes (9) mindestens ein Gelenk (13) vorhanden ist.

6. Solarpaneel nach Anspruch 5,
**dadurch gekennzeichnet, dass**
der um das Gelenk (13) schwenkbare Tragarm (10) in mehreren Positionen fixierbar ausgeführt ist, sodass das Solarpaneel (1) eine horizontale Position oder eine um einen Winkel verschwenkte Position auf dem Zaun (3) einnimmt.

7. Solarpaneel nach einem der vorstehend genannten Ansprüche,
**dadurch gekennzeichnet, dass**
mindestens einer der das Solarpaneel (1) aufnehmenden Tragarme (10) mittels einer Verstelleinrichtung in eine definierte Position ausrichtbar ist.

8. Solarpaneel nach Anspruch 7,
**dadurch gekennzeichnet, dass**
die Verstelleinrichtung einen Motor umfasst.

9. Solarpaneel nach Anspruch 7 oder 8,
**dadurch gekennzeichnet, dass**
die Verstelleinrichtung einen ferngesteuerten Motor umfasst

10. Solarpaneel nach einem der Ansprüche 7 bis 9,
**dadurch gekennzeichnet, dass**
die Verstelleinrichtung ein Getriebe aufweist

11. Solarpaneel nach einem der Ansprüche 7 bis 10,
**dadurch gekennzeichnet, dass**
die Verstelleinrichtung über eine WLAN-Schnittstelle ansteuerbar ist

12. Zaun (3), bestehend aus mehreren Zaunelementen (2), von denen jedes Zaunelement (2) aus zwei Zaunpfeilern (4, 5) und einem zwischen den Zaunpfeilern (4, 5) angeordneten Flächengebilde (6) besteht,
**dadurch gekennzeichnet, dass**
auf dem oberen, freien Ende der Zaunpfeiler (4, 5) mindestens ein Solarpaneel (1) nach einem der vorstehend genannten Ansprüche fixiert ist, dessen Klammer oder Hülse (11) zu dem oberen, freien Ende (12) wenigstens eines der Zaunpfeiler (4, 5) passend ausgeführt und auf einen der korrespondierenden Zaunpfeiler (4, 5) aufgesetzt oder mit diesem verbunden ist.

13. Zaun nach Anspruch 12,
**dadurch gekennzeichnet, dass**
die Klammer oder Hülse (11) stoffschlüssig, formschlüssig, kraftschlüssig oder mittels einer lösbaren Verbindung an dem korrespondierenden Zaunpfeiler (4, 5) befestigt ist.
